# FASCICULE DE BREVET EUROPEEN

(11) **EP 1 925 422 B1**
(45) Date de publication et mention de la délivrance du brevet: **01.07.2009**
(21) Numéro de dépôt: 07121197.3
(22) Date de dépôt: 21.11.2007
(51) Int. Cl.: B29C 47/02, B29B 15/12, B29C 47/28, B29C 47/22

(54) **Fil gainé pour la fabrication d'un pneumatique, pneumatique muni de ce fil gainé, dispositif pour la fabrication de ce fil gainé, installation et procédé pour la fabrication de ce pneumatique**
Manteldraht für die Herstellung eines Reifens, mit diesem Manteldraht ausgestatteter Reifen, Vorrichtung zur Herstellung dieses Manteldrahts sowie Anlage und Verfahren zur Herstellung dieses Reifens
Sheathed wire for manufacturing a tyre, tyre equipped with this sheathed wire, device for manufacturing this sheathed wire, installation and method for manufacturing this tyre

(30) Priorité: 24.11.2006 FR 0655088; 05.02.2007 US 899858 P
(43) Date de publication de la demande: 28.05.2008
(73) Titulaire: Société de Technologie Michelin, 63000 Clermont-Ferrand (FR); Michelin Recherche et Technique S.A., 1763 Granges-Paccot (CH)
(72) Inventeur: Leblanc, Dominique, 63200 Mozac (FR); Guinet, Daniel, 63100 Clermont-Ferrand (FR); Hinc, Henri, 63540 Romagnat (FR); Legagneur, Alain, 63200 Mozac (FR)
(74) Mandataire: de la Bigne, Guillaume Michel Marie

(56) Documents cités:
- WO-A-20/04064887
- FR-A1- 2 687 094
- JP-A- 2000 326 384
- US-A- 3 082 140
- US-A- 4 455 133
- US-A- 4 708 837

## Description

La présente invention concerne un fil gainé pour la fabrication d'un pneumatique, un pneumatique muni de ce fil gainé, un dispositif pour la fabrication de ce fil gainé, ainsi qu'une installation et un procédé pour la fabrication de ce pneumatique.

On connaît déjà dans l'état de la technique un pneumatique comprenant une nappe de renfort carcasse munie d'un fil gainé du type comportant un fil nu revêtu d'une gaine en gomme. Le terme « fil » doit ici être compris dans un sens général. Ainsi, dans la suite, on désignera, par exemple, par fil un fil monofilament, un fil multifilaments, un câble ou un retors. Le fil pourra être constitué d'une ou plusieurs matières comme, par exemple, une matière textile ou métallique et être traité ou non. Le gainage du fil de renfort carcasse favorise la liaison du fil avec la gomme environnante, notamment lors de la fabrication d'une ébauche du pneumatique.

Pour fabriquer le fil gainé, il est connu d'utiliser un dispositif, tel que décrit par exemple dans FR-A-2 687 094, comprenant une chambre de gainage destinée à être alimentée en gomme et à être traversée par le fil. Le fil nu, entraîné dans la chambre de gainage, se couvre de gomme de façon à obtenir, à la sortie de la chambre de gainage, un fil gainé.

Pour fabriquer le pneumatique comprenant des fils de renfort carcasse gainés, il est connu d'utiliser une installation, telle que décrite notamment dans EP-A-1 590 169, comprenant des moyens de pose du fil gainé sur l'ébauche de pneumatique.

Dans ce type d'installation, l'ébauche est généralement portée par un noyau rigide amovible, mobile en rotation, conformant l'ébauche de façon qu'elle présente les parties habituelles du pneumatique notamment un sommet et deux flancs. Avant la pose du renfort carcasse, l'ébauche comprend par exemple une couche de gomme d'étanchéité recouverte par une couche de gomme d'accrochage du renfort carcasse sur laquelle le fil gainé est destiné à être posé. Après la pose du renfort carcasse, cette couche de produits est recouverte par d'autres couches de gomme de façon à être noyée dans la gomme.

Dans l'installation telle que décrite dans EP 1 590 169, les moyens de pose du fil gainé comportent un organe de guidage du fil déplaçable selon un mouvement alternatif de va-et-vient, notamment sensiblement entre deux flancs de l'ébauche.

Le document US - A - 3082140 décrit un fil revêtu d'une gaine en gomme et un pneumatique comportant un tel fil gainé.

Le document WO 2004/064887 - A décrit une installation et un procédé pour la fabrication d'un pneumatique comprenant des moyens de pose d'un fil gainé sur une ébauche de pneumatique.

Généralement, le fil gainé continu formant le renfort carcasse s'étend d'un flanc à l'autre de l'ébauche du pneumatique, en passant par le sommet, suivant un trajet en boustrophédon de façon à former des plis d'aller et retour du fil. Ces plis s'étendent dans une zone des flancs destinée à l'accrochage du pneumatique sur une jante. Cette zone est appelée habituellement « zone basse » du pneumatique.

Du fait que différentes parties du pneumatique ont des fonctions différentes (ainsi, par exemple, le sommet du pneumatique assure le contact du pneumatique avec le sol alors que la zone basse du pneumatique assure l'accrochage du pneumatique sur la jante), on souhaite adapter autant que possible la structure de ces différentes parties du pneumatique à leur fonction. Cette adaptation peut consister à utiliser différentes couches de gomme adaptées aux différentes fonctions des parties du pneumatique et/ou utiliser différents moyens de liaison du renfort carcasse avec la gomme des différentes parties du pneumatique.

L'invention a notamment pour but de permettre l'adaptation de la structure de différentes parties du pneumatique, par exemple le sommet et la zone basse du pneumatique, à leur fonction.

A cet effet, l'invention, comme définie dans la revendication 1, a pour objet un fil gainé pour la fabrication d'un pneumatique, du type précité, caractérisé en ce que la gaine comprend plusieurs tronçons espacés entre eux le long du fil nu de façon que des parties nues de fil alternent avec des parties gainées de fil.

L'alternance des parties nues et gainées permet de différencier les moyens de liaison du fil formant le renfort carcasse avec la gomme des différentes parties du pneumatique. Ainsi, le fil gainé selon l'invention permet d'adapter les structures des différentes parties du pneumatique à leur fonction.

Suivant une caractéristique optionnelle du fil selon l'invention, les parties gainées ont des longueurs sensiblement identiques.

Un tel fil est particulièrement adapté pour la fabrication d'un pneumatique car les parties nues et gainées alternent de façon périodique.

L'invention a également pour objet un pneumatique du type comprenant au moins un fil de renfort carcasse gainé, caractérisé en ce que le fil gainé est tel que défini ci-dessus.

Le pneumatique selon l'invention présente alors des parties dont les structures s'adaptent mieux aux différentes fonctions qu'elles doivent remplir.

Suivant d'autres caractéristiques optionnelles du pneumatique selon l'invention:
- Le fil s'étend d'un flanc à l'autre du pneumatique, en passant par le sommet, suivant un trajet en boustrophédon de façon à former des plis d'aller et retour du fil, les plis coïncidant avec des parties nues du fil.
- Le fil s'étend d'un flanc à l'autre du pneumatique, en passant par le sommet, suivant un trajet en boustrophédon de façon à former des plis d'aller et retour du fil, les plis coïncidant avec des parties gainées du fil.
- Chaque pli est relié directement à un pli qui le précède et un pli qui le suit par respectivement une partie gainée de fil et une partie nue de fil.

Les différents types de renfort carcasse ainsi formés par les différents fils présentent des structures différentes. Ainsi, deux pneumatiques présentant deux types de renfort carcasse différents auront deux structures différentes, chacune s'adaptant de manière spécifique aux fonctions qu'elle doit remplir.

L'invention a également pour objet un dispositif, comme défini dans la revendication 7, pour la fabrication d'un fil gainé comprenant un fil nu revêtu d'une gaine en gomme, le dispositif étant du type comprenant une chambre de gainage, dite fixe, destinée à être alimentée en gomme et à être traversée par le fil, caractérisé en ce qu'il comprend un organe destiné à isoler vis-à-vis de la gomme, une partie du fil nu traversant la chambre fixe de gainage, dite partie traversante du fil, cet organe d'isolation étant déplaçable entre
- une position d'isolation de la partie traversante du fil vis-à-vis de la gomme, et
- une position de mise en contact de la partie traversante du fil avec la gomme.

Un tel dispositif est destiné à fabriquer un fil gainé comprenant des parties nues correspondant au passage de parties traversantes du fil nu dans la chambre fixe de gainage lorsque l'organe d'isolation est dans la position d'isolation. Ces parties nues alternent avec des parties gainées correspondant au passage de parties traversantes du fil nu dans la chambre fixe de gainage lorsque l'organe d'isolation est dans la position de mise en contact.

Suivant une caractéristique optionnelle du dispositif selon l'invention, l'organe d'isolation est déplaçable en translation entre ses positions d'isolation et de mise en contact, notamment parallèlement à une direction sensiblement rectiligne de défilement du fil à travers la chambre fixe de gainage.

Un tel organe d'isolation est simple à déplacer entre les positions d'isolation et de mise en contact.

Suivant d'autres caractéristiques optionnelles du dispositif selon l'invention :
- L'organe d'isolation a une forme générale tubulaire permettant le passage du fil axialement à travers cet organe d'isolation, l'organe d'isolation comprenant un évidement interne, destiné à être traversé par le fil, formant une chambre de gainage, dite mobile, et au moins un orifice formant un passage de gomme entre les chambres fixe et mobile.
- L'organe d'isolation est destiné à séparer entre elles des parties amont et aval de la chambre fixe de gainage, la partie aval de la chambre fixe de gainage étant destinée a être traversée par le fil, l'organe d'isolation comprenant un orifice formant un passage pour la gomme entre les deux parties amont et aval de la chambre fixe de gainage.

Suivant une autre caractéristique optionnelle du dispositif selon l'invention, le dispositif comprend des moyens de déplacement alternatif périodique de l'organe d'isolation.

Les moyens de déplacement alternatif périodique permettent d'imposer à l'organe d'isolation son déplacement entre les positions d'isolation et de mise en contact avec une fréquence donnée.

Suivant d'autres caractéristiques optionnelles du dispositif selon l'invention, le dispositif comprend :
- Des moyens de réglage de la fréquence du déplacement alternatif de l'organe d'isolation. Ces moyens de réglages permettent de régler le dispositif de façon à obtenir un fil gainé avec des parties nues et des parties gainées qui alternent sensiblement à la fréquence du déplacement alternatif de l'organe d'isolation.
- Des moyens de réglage de l'amplitude du déplacement alternatif de l'organe d'isolation. Ces moyens permettent de régler le dispositif de façon à définir les longueurs respectives des parties nues et des parties gainées du fil.
- Des moyens de réglage de la position moyenne de l'organe d'isolation par rapport à la chambre fixe de gainage. Ces moyens permettent également de définir les longueurs respectives des parties nues et des parties gainées du fil.

Avantageusement, les moyens de réglage de la position moyenne de l'organe d'isolation par rapport à la chambre fixe de gainage comprennent un premier support, portant les moyens de déplacement alternatif de l'organe d'isolation, monté mobile sur un second support fixe par rapport à la chambre fixe de gainage.

Suivant une autre caractéristique optionnelle du dispositif selon l'invention, les moyens de déplacement alternatif de l'organe d'isolation comprennent un ensemble de type bielle-manivelle.

Cet ensemble permet le déplacement de l'organe d'isolation entre les positions d'isolation et de mise en contact en transformant un mouvement rotatif de la manivelle en un mouvement alternatif périodique de l'organe d'isolation.

Avantageusement :
- Les moyens de réglage de la fréquence du déplacement alternatif de l'organe d'isolation comprennent des moyens de réglage de la vitesse de rotation de la manivelle.
- L'ensemble de type bielle-manivelle comprend un disque formant manivelle, les moyens de réglage de l'amplitude du déplacement alternatif de l'organe d'isolation comprenant des moyens de réglage d'une position d'articulation de la bielle sur le disque.

L'invention a aussi pour objet une installation pour la fabrication d'un pneumatique, du type comprenant des moyens de pose d'un fil gainé sur une ébauche de pneumatique, caractérisée en ce qu'elle comprend un dispositif pour la fabrication du fil gainé tel que défini ci-dessus alimentant en continu les moyens de pose.

Cette installation permet de mettre à profit les avantages du dispositif pour la fabrication du fil gainé en association avec des moyens connus de pose d'un fil gainé sur une ébauche de pneumatique.

Selon une caractéristique optionnelle de l'installation selon l'invention, les moyens de pose du fil gainé comportent un organe de guidage du fil déplaçable selon un mouvement alternatif périodique de va-et-vient, notamment sensiblement entre deux flancs de l'ébauche, l'installation comprenant de plus des moyens de synchronisation du mouvement alternatif périodique de l'organe de guidage avec le déplacement alternatif de l'organe d'isolation.

La synchronisation permet à un fil gainé fabriqué au moyen du dispositif décrit ci-dessus d'être posé alternativement par les moyens de pose entre les deux flancs de l'ébauche suivant un mouvement périodique synchronisé avec le déplacement de l'organe d'obturation qui impose à la fois la périodicité et les longueurs respectives des parties nues et gainées du fil.

Selon une autre caractéristique optionnelle de l'installation selon l'invention, l'installation comprend des moyens de déplacement relatif des moyens de pose et du dispositif de fabrication du fil gainé permettant le réglage de la longueur du trajet du fil gainé entre ces moyens de pose et le dispositif de fabrication.

L'invention a également pour objet un procédé pour la fabrication d'un pneumatique, comme défini dans la revendication 21, du type dans lequel on dépose un fil gainé sur une ébauche de pneumatique, caractérisé en ce que l'on fabrique et on dépose en continu le fil gainé au moyen d'une installation telle que définie ci-dessus.

Le procédé selon l'invention permet de poser de façon continue un fil gainé comprenant des parties nues alternant avec des parties gainées sur une ébauche de pneumatique dont la structure des différentes parties est adaptée à leurs fonctions respectives.

L'invention a enfin pour objet un procédé pour la fabrication d'un pneumatique du type dans lequel on dépose un fil gainé sur une ébauche de pneumatique, caractérisé en ce que l'on dépose en continu un fil gainé comprenant un fil nu revêtu d'une gaine en gomme, la gaine comprenant plusieurs tronçons espacés entre eux le long du fil nu de façon que des parties nues de fil alternent avec des parties gainées de fil.

Selon d'autres caractéristiques optionnelles du procédé selon l'invention:
- on dépose le fil d'un flanc à un autre de l'ébauche du pneumatique, en passant par un sommet de l'ébauche, suivant un trajet en boustrophédon de façon à former des plis d'aller et retour du fil, les plis coïncidant avec des parties nues du fil.
- On dépose le fil d'un flanc à un autre de l'ébauche, en passant par un sommet de l'ébauche du pneumatique, suivant un trajet en boustrophédon de façon à former des plis d'aller et retour du fil, les plis coïncidant avec des parties gainées du fil.
- On dépose le fil de façon que chaque pli est relié directement à un pli qui le précède et un pli qui le suit par respectivement une partie gainée de fil et une partie nue de fil. Des formes avantageuses de l'invention font l'objet des revendications dépendantes.

L'invention sera mieux comprise à la lecture de la description qui va suivre, donnée uniquement à titre d'exemple non limitatif et faite en se référant aux dessins dans lesquels :
- la figure 1 est une vue en perspective d'une installation pour la fabrication d'un pneumatique selon l'invention,
- la figure 2 est une vue partielle de l'installation selon l'invention représentée sur la figure 1,
- la figure 3 est une vue de dessus en coupe partielle d'un dispositif selon l'invention, pour la fabrication d'un fil gainé, de l'installation représentée sur la figure 1,
- les figures 4, 5 et 6 sont des vues en coupe d'un organe d'isolation du dispositif représenté sur la figure 3 dans différentes positions de cet organe d'isolation,
- la figure 7 est une représentation schématique d'un premier mode de synchronisation entre l'organe d'isolation et des moyens de pose du fil gainé de l'installation selon l'invention,
- la figure 8 est une vue en coupe axiale d'un pneumatique selon l'invention comprenant une nappe carcasse munie d'un fil gainé déposé sur une ébauche suivant le mode de synchronisation de la figure 7,
- les figures 9 et 10 sont des représentation et vue analogues aux figures 7 et 8 suivant un deuxième mode de synchronisation,
- la figure 11 est une représentation analogue de la figure 7 suivant un troisième mode de synchronisation,
- la figure 12 est une vue en coupe d'une variante de réalisation de l'organe d'isolation.

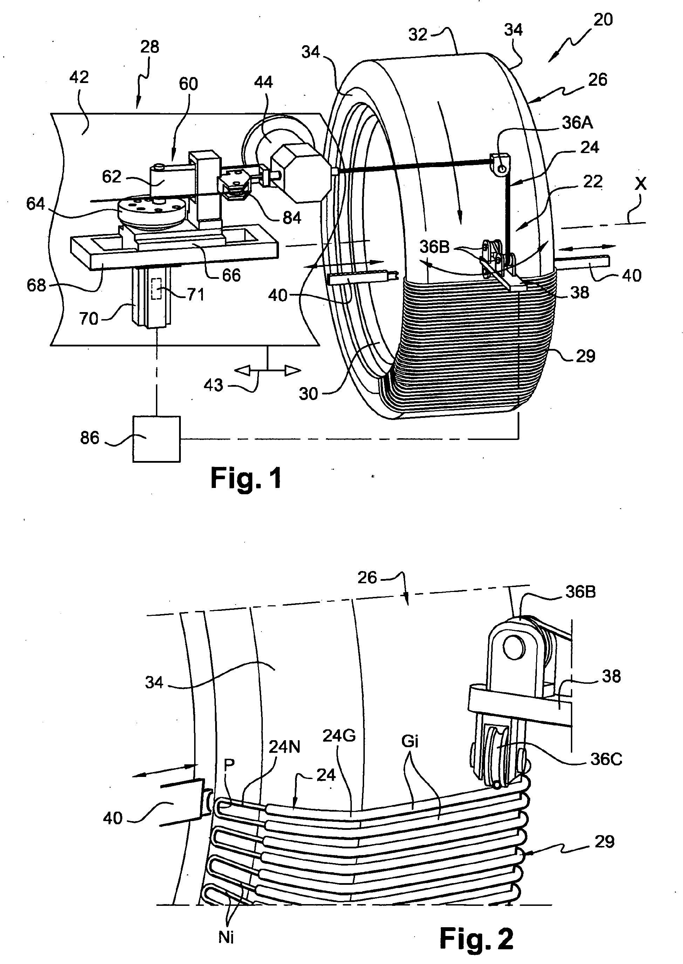

On a représenté, sur les figures 1 à 3, une installation selon l'invention, désignée par la référence générale 20, pour la fabrication d'un pneumatique. Cette installation 20 comprend des moyens 22 de pose d'un fil gainé 24 sur une ébauche 26 du pneumatique et un dispositif 28 pour la fabrication de ce fil gainé 24. Le fil gainé 24 est destiné à former le renfort carcasse 29 de pneumatique. Sur les figures 1 et 2, on a représenté ce renfort carcasse 29 en cours de fabrication sur l'ébauche 26.

L'ébauche 26 est portée par un noyau 30 rigide amovible conformant l'ébauche 26 de façon qu'elle présente un sommet 32 et deux flancs 34. Ce noyau 30 est mobile en rotation autour d'un axe X de l'ébauche 26.

Comme on peut le voir sur les figures 1 et 2, les moyens de pose 22 comprennent une pluralité de poulies 36A à 36C de guidage du fil gainé 24. Plus particulièrement, dans l'exemple illustré, le fil gainé 24 est guidé par une poulie d'entrée 36A, deux poulies intermédiaires 36B et une poulie de sortie 36C.

Les moyens de pose 22 comprennent également un bras mobile 38 dont la cinématique connue permet de déposer le fil sur la surface de l'ébauche de pneumatique et portant les poulies intermédiaires 36B et la poulie de sortie 36C. La poulie de sortie 36C est déplaçable selon un mouvement alternatif périodique de va-et-vient, notamment sensiblement entre les deux flancs 34 de l'ébauche 26, en passant par le sommet 32.

La poulie de sortie 36C forme un organe de guidage du fil 24 sur l'ébauche 26. Plus particulièrement, comme on peut le voir plus en détail sur la figure 2, la poulie de sortie 36C guide le fil 24 d'un flanc 34 à l'autre de l'ébauche 26, en passant par le sommet 32, suivant un trajet en boustrophédon, de façon à former des plis P d'aller et retour, formant des zones de passage du sens aller au sens retour du fil 24. Des presseurs 40, mobiles sensiblement axialement par rapport à l'ébauche 26, sont disposés au voisinage de chacun des flancs 34 de l'ébauche 26. Ces presseurs 40 permettent de former les plis P du fil sur les flancs 34 de l'ébauche 26.

Dans l'exemple décrit, le fil gainé 24 est posé sensiblement parallèlement à des plans radiaux de l'ébauche. En variante, le fil 24 pourrait être posé parallèlement à des plans inclinés par rapport à l'axe X de l'ébauche.

Le fil 24 comprend un fil nu 24N revêtu d'une gaine 24G en gomme. Le fil nu 24N comprend par exemple un câble, tressé ou non, en métal et/ou en fibres naturelles ou synthétiques.

En se référant par exemple à la figure 2, on voit que la gaine 24G comprend plusieurs tronçons espacés entre eux le long du fil nu 24N de façon que des parties nues Nᵢ de fil alternent avec des parties gainées Gᵢ de fil.

En se référant à la figure 1, on voit que le dispositif 28 pour la fabrication de ce fil 24 comprend une embase 42. Cette embase 42 est déplaçable à l'aide de moyens classiques 43 autorisant le déplacement relatif des moyens de pose 22 et du dispositif 28, afin notamment de régler la longueur du trajet du fil gainé 24 entre ces moyens de pose 22 et ce dispositif 28.

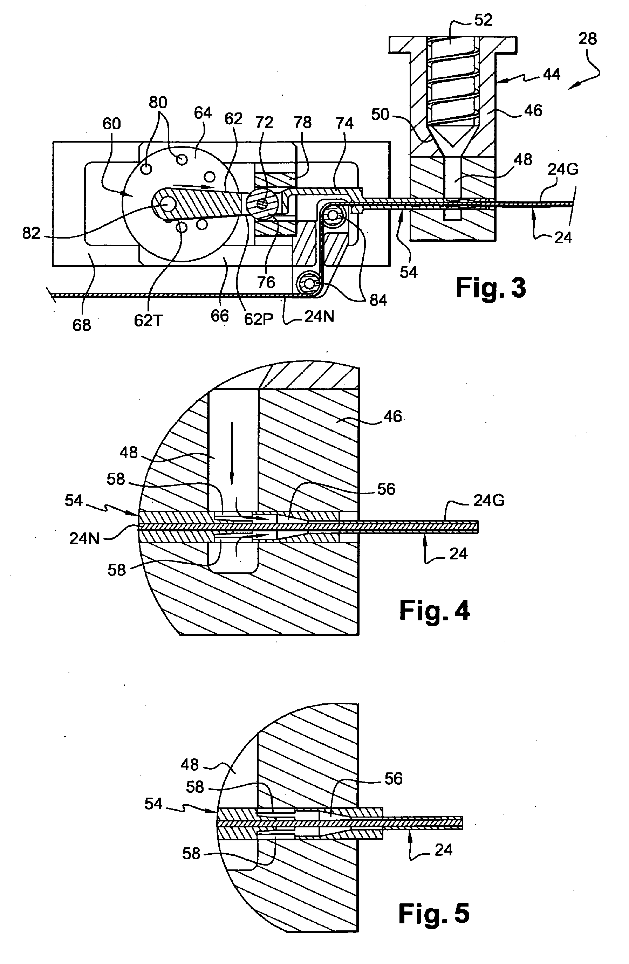

L'embase 42 porte un boîtier 44 comprenant un corps 46 dans lequel sont ménagées deux chambres, à savoir, comme cela est représenté sur la figure 3, une chambre fixe 48 de gainage communiquant avec une chambre 50 d'alimentation en gomme.

La chambre fixe de gainage 48 est destinée, d'une part, à être alimentée en gomme par la chambre 50 et, d'autre part, à être traversée par le fil 24.

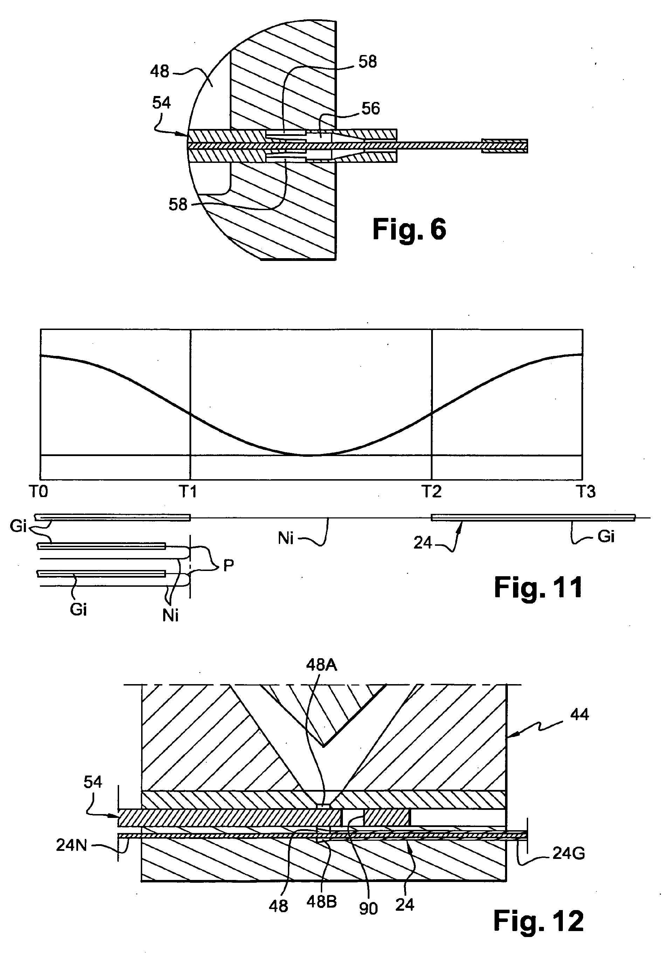

La gomme chauffée est introduite et mise sous pression dans les chambres 48, 50 à l'aide d'un moyen d'alimentation 52 tel que, par exemple, une vis sans fin. Pour obtenir l'alternance des parties nues Nᵢ et gainées Gᵢ du fil 24, le dispositif 28 comprend un organe d'isolation 54 traversant la chambre fixe de gainage 48. L'organe 54 est destiné à isoler, vis-à-vis de la gomme, une partie du fil nu 24N traversant la chambre fixe de gainage 48, dite partie traversante du fil. Cet organe d'isolation 54 est déplaçable en translation, notamment parallèlement à une direction sensiblement rectiligne de défilement du fil 24 à travers la chambre fixe de gainage 48, entre une position de mise en contact de la partie traversante du fil avec la gomme, telle que représentée sur la figure 4, et une position d'isolation de la partie traversante du fil vis-à-vis de la gomme, telle que représentée sur la figure 5 ou 6.

La partie traversante du fil 24 est gainée lorsque l'organe d'isolation 54 est dans sa position de mise en contact et non gainée lorsque l'organe d'isolation 54 est dans sa position d'isolation.

En se référant aux figures 4 à 6, on voit que l'organe d'isolation 54 a une forme générale tubulaire permettant le passage du fil 24 axialement à travers cet organe d'isolation 54.

L'organe d'isolation 54 comprend un évidement interne, destiné à être traversé par le fil 24, formant une chambre mobile de gainage 56.

L'organe d'isolation 54 comprend également au moins un orifice 58 formant un passage de gomme entre les chambres fixe 48 et mobile 56. Dans l'exemple illustré, l'organe d'isolation 54 comprend quatre orifices 58, chacun en forme générale de fente.

L'embase 42 porte également des moyens 60 de déplacement de l'organe d'isolation 54. Comme on peut le voir sur les figures 1 et 3, les moyens de déplacement 60 sont de préférence de type alternatif périodique et comprennent, dans l'exemple illustré, un ensemble de type bielle 62 -manivelle 64. Dans l'exemple illustré, la manivelle 64 a une forme générale de disque.

Afin de permettre le réglage de la position moyenne de l'organe d'isolation 54 par rapport à la chambre fixe de gainage 48, l'ensemble bielle 62 -manivelle 64 est porté par un premier support, formant un chariot 66, monté mobile sur un second support 68 fixe par rapport à la chambre fixe de gainage 48. Ce second support 68 est solidaire de l'embase 42.

Les moyens de déplacement 60 comprennent également des moyens motorisés 70 (voir figure 1) entraînant la manivelle 64. Ces moyens motorisés 70 sont munis de moyens classiques 71 pour le réglage de la vitesse de rotation de la manivelle 64 et forment ainsi des moyens de réglage de la fréquence du déplacement alternatif périodique de l'organe d'isolation 54.

Comme on peut le voir sur la figure 3, une première broche d'articulation 72 relie un pied 62P de la bielle 62 à un prolongement 74 de l'organe d'isolation 54 externe au boîtier 44. Cette première broche d'articulation 72 est portée par un galet 76 coopérant avec un organe 78, solidaire du chariot 66, participant au guidage en translation de l'organe d'isolation 54 et du pied 62P de bielle.

Par ailleurs, la manivelle 64 comprend des orifices 80 d'articulation d'une tête 62T de la bielle 62. Ces orifices 80, répartis en spirale sur la manivelle 64, forment des moyens de réglage de l'amplitude du déplacement alternatif de l'organe d'isolation 54. En effet, chaque orifice 80 forme un logement pour une seconde broche d'articulation 82 reliant la manivelle 64 et la tête 62T de la bielle 62. Ainsi, on peut modifier l'amplitude du déplacement alternatif de l'organe d'isolation 54 en réglant la position d'articulation de la bielle 62 sur la manivelle 64 en changeant la broche 82 d'orifice 80.

Dans l'exemple décrit, le réglage de la position d'articulation de la bielle 62 sur la manivelle 64 se fait à l'aide de moyens discontinus (les orifices 80). En variante, le réglage de la position d'articulation de la bielle 62 sur la manivelle 64 pourrait être réalisé à l'aide de moyens continus.

Le dispositif 18 comprend encore des poulies 84 de guidage du fil 24 en amont de la chambre de gainage 48. Ces poulies de guidage 84 sont portées par le chariot 66.

Le dispositif 28 pour la fabrication du fil gainé 24 alimente en continu les moyens de pose 22. Des moyens classiques 86, schématisés sur la figure 1, permettent de synchroniser le mouvement alternatif périodique de l'organe de guidage 36C avec le déplacement alternatif de l'organe d'isolation 54. Ainsi, l'installation 20 permet, à la fois, de fabriquer et de déposer sur l'ébauche 26 le fil gainé 24, ces deux opérations étant réalisées en continu.

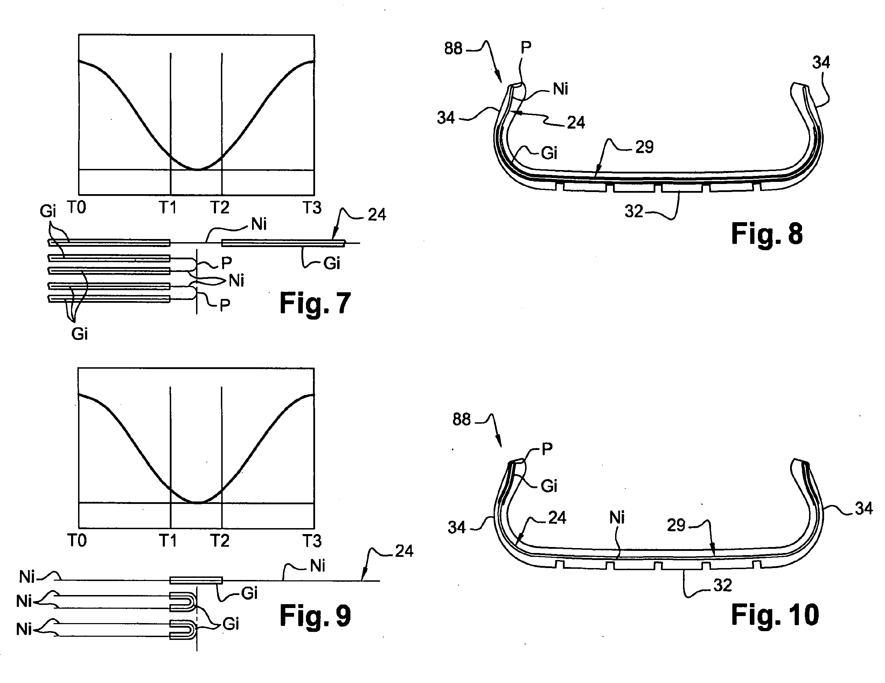

On a représenté sur les figures 7, 9 et 11 différents modes de réalisation du fil 24 obtenus par différents réglages du dispositif de fabrication 28, plus particulièrement différents réglages de la cinématique de l'organe d'isolation 54 (notamment réglage des moyens 70, 71 et 80). On notera que, dans ces différents modes de réalisation, les parties gainées Gᵢ du fil 24 ont des longueurs sensiblement identiques.

Par ailleurs, on a représenté sur les figures 8 et 10 un pneumatique 88 dont le renfort carcasse 29 comprend le fil gainé 24 obtenu dans les conditions des figures 7 et 9 respectivement.

Sur les figures 7 à 11, les éléments analogues sont désignés par des références identiques.

Sur chacune des figures 7, 9 et 11, on a représenté une courbe d'allure générale sensiblement sinusoïdale représentant l'évolution, en fonction du temps, de la position de l'organe d'isolation 54 sur une période du déplacement alternatif de cet organe 54.

Dans le cas d'un réglage de la cinématique de l'organe d'isolation 54 conforme à la figure 7, entre les temps T1 et T2 de la période, l'organe 54 est dans une position dans laquelle la chambre 56 est isolée de la chambre 48, et le fil 24N est isolé de la gomme, et pendant le reste de la période (T0 à T1 et T2 à T3), l'organe 54 est dans une position permettant à la gomme de pénétrer depuis la chambre 48 dans la chambre 56 en passant par les orifices 58, mettant l'arrivée de gomme en contact avec le fil nu 24N.

En sortie du dispositif de fabrication 28, le fil 24 a un aspect conforme au tronçon de fil 24 illustré juste en-dessous de la courbe de la figure 7 : des parties nues Nᵢ du fil 24 alternent avec des parties gainées Gᵢ de ce fil 24.

Par ailleurs, les moyens de pose 22 sont synchronisés avec le dispositif de fabrication 28, plus particulièrement avec l'organe d'isolation 54, de façon que les plis P d'aller et retour du fil 24 coïncident avec des parties nues Nᵢ du fil, comme cela est montré par les tronçons de fil plié 24 illustrés en-dessous de la courbe de la figure 7.

On obtient ainsi le pneumatique 88 tel que représenté sur la figure 8 dont le fil gainé 24 de la nappe carcasse s'étend d'un flanc 34 à l'autre du pneumatique, en passant par le sommet 32 du pneumatique, suivant un trajet en boustrophédon de façon que les plis P coïncident avec des parties nues Nᵢ du fil.

Dans le cas d'un réglage de la cinématique de l'organe d'isolation 54 conforme à la figure 9, entre les temps T1 et T2 de la période, l'organe 54 est dans une position permettant à la gomme de pénétrer depuis la chambre 48 dans la chambre 56 en passant par les orifices 58, et pendant le reste de la période (T0 à T1, T2 à T3), l'organe 54 est dans une position dans laquelle la chambre 56 est isolée de la chambre 48. En sortie du dispositif de fabrication 28, le fil 24 a un aspect conforme au tronçon de fil 24 illustré juste en-dessous de la courbe de la figure 9.

Toutefois, à la différence du cas de la figure 7, les moyens de pose 22 sont synchronisés avec le dispositif de fabrication 28 de façon que les plis P du fil coïncident avec des parties gainées Gᵢ du fil, comme cela est montré par les tronçons de fil plié 24 illustrés en-dessous de la courbe de la figure 9.

On obtient ainsi le pneumatique 88 tel que représenté sur la figure 10 : à la différence du pneumatique illustré sur la figure 8, les plis P du fil 24 coïncident avec des parties gainées Gᵢ du fil.

Dans le cas de la figure 11, la cinématique de l'organe d'isolation 54 est réglée de façon analogue au cas de la figure 7. Toutefois, dans le cas de la figure 11, l'intervalle de temps T1-T2 est supérieur à l'intervalle de temps T1-T2 du cas de la figure 7. Les parties nues Nᵢ du fil obtenu dans les conditions de la figure 11 ont donc une longueur supérieure à celle des parties nues Nᵢ du fil obtenu dans les conditions de la figure 7.

Les moyens de pose 22 sont synchronisés avec le dispositif de fabrication 28 de façon que chaque pli P est relié directement à un pli P qui le précède et un pli P qui le suit par respectivement une partie gainée Gᵢ de fil et une partie nue Nᵢ de fil, comme cela est montré par les tronçons de fil plié 24 illustrés en-dessous de la courbe de la figure 11.

On obtient ainsi un pneumatique qui, à la différence du pneumatique illustré sur la figure 8, comprend un fil 24 de nappe carcasse dont chaque pli P est relié directement à un pli P qui le précède et un pli P qui le suit par respectivement une partie gainée Gᵢ de fil et une partie nue Nᵢ de fil.

On a représenté, sur la figure 12, une variante de réalisation de l'organe d'isolation 54. Sur cette figure, les éléments analogues à ceux des figures précédentes sont désignés par des références identiques.

Dans ce cas, l'organe d'isolation 54 sépare entre elles des parties amont 48A et aval 48B de la chambre fixe de gainage 48. La partie aval 48B de la chambre fixe de gainage 48 est traversée par le fil 24.

L'organe d'isolation 54 comprend un orifice 90 formant un passage pour la gomme entre les deux parties amont 48A et aval 48B de la chambre fixe de gainage 48.

Le fonctionnement de l'organe d'isolation 54 représenté sur la figure 12 se déduit, mutatis mutandis, de celui de l'organe d'isolation représenté sur les figures précédentes.

Parmi les avantages de l'invention, on notera que celle-ci permet l'adaptation de la structure de différentes parties du pneumatique à leur fonction. Les différents moyens de réglages du dispositif de fabrication 28 permettent de régler, selon les besoins, les longueurs de parties nues et gainées du fil selon l'invention.

L'invention ne se limite pas aux modes de réalisation précédemment décrits.

En effet, les moyens d'alimentation en gomme 52 pourront être des moyens d'alimentation de type volumétrique permettant de doser en continu une quantité de gomme destinée à gainer le fil. Ainsi, on pourra faire varier la quantité de gomme gainant le fil de façon à ce que le diamètre de la gaine de gomme autour du fil soit adapté à la position radiale du fil posé sur l'ébauche.

De plus, les moyens de déplacement alternatif périodique 62,64 pourront être différents d'un ensemble de type bielle-manivelle. Ainsi, les moyens de déplacement 62, 64 pourront comprendre par exemple, des moyens à cames, à solénoïdes, à moteur pilotés, etc. De plus, le mouvement alternatif périodique de l'organe 54 pourra avoir une forme autre que sinusoïdale, par exemple, en créneaux, de fréquence synchronisée avec la fréquence les moyens de pose 22 du fil.

## Revendications

1. Fil gainé (24) pour la fabrication d'un pneumatique (88), du type comprenant un fil nu (24N) revêtu d'une gaine (24G) en gomme, **caractérisé en ce que** la gaine (24G) comprend plusieurs tronçons espacés entre eux le long du fil nu (24N) de façon que des parties nues (Nᵢ) de fil alternent avec des parties gainées (Gᵢ) de fil.

2. Fil gainé (24) selon la revendication 1, dans lequel les parties gainées (Gᵢ) ont des longueurs sensiblement identiques.

3. Pneumatique (88) du type comprenant au moins un fil de renfort carcasse gainé, **caractérisé en ce que** le fil gainé (24) est selon la revendication 1 ou 2.

4. Pneumatique (88) selon la revendication 3, dans lequel le fil (24) s'étend d'un flanc (34) à l'autre du pneumatique, en passant par le sommet (32), suivant un trajet en boustrophédon de façon à former des plis (P) d'aller et retour du fil, les plis coïncidant avec des parties nues (Nᵢ) du fil.

5. Pneumatique (88) selon la revendication 3, dans lequel le fil (24) s'étend d'un flanc (34) à l'autre du pneumatique, en passant par le sommet (32), suivant un trajet en boustrophédon de façon à former des plis (P) d'aller et retour du fil, les plis coïncidant avec des parties gainées (Gᵢ) du fil.

6. Pneumatique (88) selon la revendication 5, dans lequel chaque pli (P) est relié directement à un pli (P) qui le précède et un pli (P) qui le suit par respectivement une partie gainée (Gᵢ) de fil et une partie nue (Nᵢ) de fil.

7. Installation (20) pour la fabrication d'un pneumatique, du type comprenant des moyens (22) de pose d'un fil gainé (24) sur une ébauche (26) de pneumatique (88) et un dispositif (28) pour la fabrication du fil gainé (24) comprenant un fil nu (24N) revêtu d'une gaine (24G) en gomme, le dispositif (28) alimentant en continu les moyens de pose (22) et comprenant une chambre de gainage (48), dite fixe, destinée à être alimentée en gomme et à être traversée par le fil (24), **caractérisée en ce que** le dispositif (28) comprend un organe (54) destiné à isoler vis-à-vis de la gomme, une partie du fil nu traversant la chambre fixe de gainage (48), dite partie traversante du fil, cet organe d'isolation (54) étant déplaçable entre :
- une position d'isolation de la partie traversante du fil (24) vis-à-vis de la gomme, et
- une position de mise en contact de la partie traversante du fil (24) avec la gomme.

8. Installation (20) selon la revendication 7, dans laquelle les moyens (22) de pose du fil gainé (24) comportent un organe (36C) de guidage du fil (24) déplaçable selon un mouvement alternatif périodique de va-et-vient, notamment sensiblement entre deux flancs (34) de l'ébauche (26), l'installation (20) comprenant de plus des moyens de synchronisation du mouvement alternatif périodique de l'organe de guidage (36C) avec le déplacement alternatif de l'organe d'isolation (54).

9. Installation (20) selon la revendication 8, comprenant des moyens (43) de déplacement relatif des moyens de pose (22) et du dispositif (28) de fabrication du fil gainé (24) permettant le réglage de la longueur du trajet du fil gainé (24) entre ces moyens de pose (22) et le dispositif de fabrication (28).

10. Installation (20) selon l'une quelconque des revendications 7 à 9, dans lequel l'organe d'isolation (54) est déplaçable en translation entre ses positions d'isolation et de mise en contact, notamment parallèlement à une direction sensiblement rectiligne de défilement du fil (24) à travers la chambre fixe de gainage (48).

11. Installation (20) selon la revendication 10, dans lequel l'organe d'isolation (54) a une forme générale tubulaire permettant le passage du fil (24) axialement à travers cet organe d'isolation (54), l'organe d'isolation (54) comprenant un évidement interne (56), destiné à être traversé par le fil (24), formant une chambre de gainage (56), dite mobile, et au moins un orifice (58) formant un passage de gomme entre les chambres fixe (48) et mobile (56).

12. Installation (20) selon la revendication 10, dans lequel l'organe d'isolation (54) est destiné à séparer entre elles des parties amont (48A) et aval (48B) de la chambre fixe de gainage (48), la partie aval (48B) de la chambre fixe de gainage (48) étant destinée à être traversée par le fil (24), l'organe d'isolation (54) comprenant un orifice (90) formant un passage pour la gomme entre les deux parties amont (48A) et aval (48B) de la chambre fixe de gainage (48).

13. Installation (20) selon l'une quelconque des revendications 7 à 12, comprenant des moyens (62, 64) de déplacement alternatif périodique de l'organe d'isolation (54).

14. Installation (20) selon la revendication 13, comprenant des moyens (70) de réglage de la fréquence du déplacement alternatif de l'organe d'isolation (54).

15. Installation (20) selon la revendication 13 ou 14, comprenant des moyens (80, 82) de réglage de l'amplitude du déplacement alternatif de l'organe d'isolation (54).

16. Installation (20) selon l'une quelconque des revendications 7 à 15, comprenant des moyens (66, 68) de réglage de la position moyenne de l'organe d'isolation (54) par rapport à la chambre fixe de gainage (48).

17. Installation (20) selon la revendication 16, dans lequel les moyens de réglage (66, 68) de la position moyenne de l'organe d'isolation (54) par rapport à la chambre fixe de gainage (48) comprennent un premier support (66), portant les moyens (62, 64) de déplacement alternatif de l'organe d'isolation (54), monté mobile sur un second support (68) fixe par rapport à la chambre fixe de gainage (48).

18. Installation (20) selon l'une quelconque des revendications 13 à 17, dans lequel les moyens de déplacement alternatif de l'organe d'isolation (54) comprennent un ensemble de type bielle-manivelle (62, 64).

19. Installation (20) selon les revendications 14 et 18 prises ensemble, dans lequel les moyens (70) de réglage de la fréquence du déplacement alternatif de l'organe d'isolation (54) comprennent des moyens (71) de réglage de la vitesse de rotation de la manivelle (64).

20. Installation (20) selon les revendications 15 et 18 prises ensemble, dans lequel l'ensemble de type bielle-manivelle (62, 64) comprend un disque formant manivelle (64), les moyens (80, 82) de réglage de l'amplitude du déplacement alternatif de l'organe d'isolation comprenant des moyens (80, 82) de réglage d'une position d'articulation de la bielle (62) sur la manivelle (64).

21. Procédé pour la fabrication d'un pneumatique (88), du type dans lequel on dépose un fil gainé (24) sur une ébauche (26) de pneumatique (88), **caractérisé eh ce que** l'on fabrique et on dépose en continu le fil gainé (24) au moyen d'une installation (20) selon l'une quelconque des revendications 7 à 20.

22. Procédé pour la fabrication d'un pneumatique (88), du type dans lequel on dépose un fil gainé (24) sur une ébauche (26) de pneumatique (88), **caractérisé en ce que** l'on dépose en continu un fil gainé comprenant un fil nu (24N) revêtu d'une gaine (24G) en gomme, la gaine (24G) comprenant plusieurs tronçons espacés entre eux le long du fil nu (24N) de façon que des parties nues (Nᵢ) de fil alternent avec des parties gainées (Gᵢ) de fil.

23. Procédé selon la revendication 22, dans lequel on dépose le fil (24) d'un flanc (34) à un autre de l'ébauche du pneumatique, en passant par un sommet (32) de l'ébauche, suivant un trajet en boustrophédon de façon à former des plis (P) d'aller et retour du fil, les plis coïncidant avec des parties nues (Nᵢ) du fil.

24. Procédé selon la revendication 22, dans lequel on dépose le fil (24) d'un flanc (34) à un autre de l'ébauche du pneumatique, en passant par un sommet (32) de l'ébauche, suivant un trajet en boustrophédon de façon à former des plis (P) d'aller et retour du fil, les plis coïncidant avec des parties gainées (Gᵢ) du fil.

25. Procédé selon la revendication 24, dans lequel on dépose le fil (24) de façon que chaque pli (P) est relié directement à un pli (P) qui le précède et un pli (P) qui le suit par respectivement une partie gainée (Gᵢ) de fil et une partie nue (Nᵢ) de fil.

## Claims

1. A sheathed thread (24) for fabricating a tire (88), the thread being of the type comprising bare thread (24N) coated in a rubber sheath (24G), **characterized in that** the sheath (24G) comprises a plurality of segments that are spaced apart from one another along the bare thread (24N) so that bare portions (Nᵢ) of the thread alternate with sheathed portions (Gᵢ) of the thread.

2. The sheathed thread (24) according to claim 1, in which the sheathed portions (Gᵢ) are substantially identical in length.

3. A tire (88) of the type comprising at least one sheathed casing reinforcement thread, **characterized in that** the sheathed thread (24) is according to claim 1 or claim 2.

4. The tire (88) according to claim 3, in which the thread (24) extends from one sidewall (34) to the other of the tire, passing over the crown (32), following a boustrophedon path so as to form go-and-return bends (P) of the thread, the bends coinciding with bare portions (Nᵢ) of the thread.

5. The tire (88) according to claim 3, in which the thread (24) extends from one sidewall (34) to the other of the tire, passing over the crown (32), following a boustrophedon path so as to form go-and-return bends (P) of the thread, the bends coinciding with sheathed portions (Gᵢ) of the thread.

6. The tire (88) according to claim 5, in which each bend (P) is connected directly to a preceding bend (P) and to a following bend (P) respectively by a sheathed portion (Gᵢ) of thread and a bare portion (Nᵢ) of thread.

7. An installation (20) for fabricating a tire, the installation being of the type comprising laying means (22) for laying a sheathed thread (24) on a tire blank (26) and a device (28) for fabricating a sheathed thread (24) comprising a bare thread (24N) coated in a rubber sheath (24G), the device (28) continuously feeding the laying means (22) and comprising a so-called stationary sheathing chamber (48) for being fed with rubber and having the thread (24) passing therethrough, **characterized in that** the device (28) comprises a member (54) for isolating from the rubber a portion of bare thread passing through the stationary sheathing chamber (48), referred to as the through portion of the thread, said isolator member (54) being movable between:
· an isolating position in which the through portion of the thread (24) is isolated from the rubber; and
· a contacting position in which the through portion of the thread (24) is put into contact with the rubber.

8. The installation (20) according to claim 7, in which the means (22) for laying the sheathed thread (24) comprise a guide member (36C) for guiding the thread (24) that is movable with periodic back-and-forth reciprocating motion, in particular substantially between two sidewalls (34) of the blank (26), the installation (20) further comprising means for synchronizing the periodic reciprocating motion of the guide member (36C) with the reciprocating displacement of the isolator member (54).

9. The installation (20) according to claim 8, comprising means (43) for displacing the laying means (22) relative to the device (28) for fabricating the sheathed thread (24) and enabling the length of the path of the sheathed thread (24) between said laying means (22) and the fabrication device (28) to be adjusted.

10. The installation (20) according to any one of claims 7 to 9, in which the isolator member (54) is movable in translation between its isolating and contacting positions, in particular parallel to a direction that is substantially parallel to the travel direction of the thread (24) through the stationary sheathing chamber (48).

11. The installation (20) according to claim 10, in which the isolator member (54) is generally tubular in shape, allowing the thread (24) to pass axially through the isolator member (54), the isolator member (54) comprising an internal recess (56) through which the thread (24) passes forming a so-called moving sheathing chamber (56), and at least one orifice (58) forming a rubber passage between the stationary (48) and moving (56) chambers.

12. The installation (20) according to claim 10, in which the isolator member (54) is for mutually separating upstream (48A) and downstream (48B) portions of the stationary sheathing chamber (48), the downstream portion (48B) of the stationary sheathing chamber (48) being designed to have the thread (24) passing therethrough, the isolator member (54) comprising an orifice (90) forming a passage for the rubber between the upstream (48A) and downstream (48B) portions of the stationary sheathing chamber (48).

13. The installation (20) according to any one of claims 7 to 12, comprising means (62, 64) for imparting periodic reciprocating displacement to the isolator member (54).

14. The installation (20) according to claim 13, comprising means (70) for adjusting the frequency of the reciprocating displacement of the isolator member (54).

15. The installation (20) according to claim 13 or claim 14, comprising means (80, 82) for adjusting the amplitude of the reciprocating displacement of the isolator member (54).

16. The installation (20) according to any one of claims 7 to 15, comprising means (66, 68) for adjusting the mean position of the isolator member (54) relative to the stationary sheathing chamber (48).

17. The installation (20) according to claim 16, in which the means (66, 68) for adjusting the mean position of the isolator member (54) relative to the stationary sheathing chamber (48) comprise a first support (66) carrying the means (62, 64) for imparting reciprocating displacement to the isolator member (54) and mounted to move on a second support (68) that is stationary relative to the stationary sheathing chamber (48).

18. The installation (20) according to any one of claims 13 to 17, in which the means for imparting reciprocating displacement to the isolator member (54) comprise a connecting rod and crank type assembly (62, 64).

19. The installation (20) according to claims 14 and 18 taken together, in which the means (70) for adjusting the frequency of the reciprocating displacement of the isolator member (54) comprise means (71) for adjusting the speed of rotation of the crank (64).

20. The installation (20) according to claims 15 and 18 taken together, in which the connecting rod and crank type assembly (62, 64) comprises a crank-forming disk (64), the means (80, 82) for adjusting the amplitude of the reciprocating displacement of the isolator member comprising means (80, 82) for adjusting the position of a hinge between the connecting rod (62) and the crank (64).

21. A method of fabricating a tire (88) of the type in which a sheathed thread (24) is laid on a tire blank (26), the method being **characterized in that** the sheathed thread (24) is fabricated and laid continuously by means of an installation (20) according to any one of claims 7 to 20.

22. A method of fabricating a tire (88) of the type in which a sheathed thread (24) is laid on a tire blank (26), **characterized in that** a sheathed thread comprising a bare thread (24N) coated in a rubber sheath (24G) is laid continuously, the sheath (24G) comprising a plurality of segments that are mutually spaced apart along the bare thread (24N) in such a manner that bare portions (Nᵢ) of thread alternate with sheathed portions (Gᵢ) of thread.

23. The method according to claim 22, in which the thread (24) is laid from one sidewall (34) to another of the tire blank by passing over a crown (32) of the blank, following a boustrophedon path so as to form go-and-return bends (P) of the thread, the bends coinciding with the bare portions (Nᵢ) of the thread.

24. The method according to claim 22, in which the thread (24) is laid from one sidewall (34) to another of the tire blank by passing over a crown (32) of the blank, following a boustrophedon path in such a manner as to form go-and-return bends (P) of the thread, the bends coinciding with sheathed portions (Gᵢ) of the thread.

25. The method according to claim 24, in which the thread (24) is laid in such a manner that each bend (P) is connected directly to a preceding bend (P) and a following bend (P) respectively by a sheathed portion (Gᵢ) of thread and a bare thread (Nᵢ) of thread.

## Patentansprüche

1. Ummantelter Draht (24) zur Herstellung eines Reifens (88), umfassend einen nackten Draht (24N), der mit einem Mantel (24G) aus Gummi verkleidet ist, **dadurch gekennzeichnet, dass** der Mantel (24G) mehrere Abschnitte umfasst, die entlang dem nackten Draht (24N) voneinander beabstandet sind, so dass sich nackte Drahteile (Nᵢ) mit ummantelten Drahtteilen (Gᵢ) abwechseln.

2. Ummantelter Draht (24) nach Anspruch 1, bei welchem die ummantelten Teile (Gᵢ) im Wesentlichen identische Längen aufweisen.

3. Reifen (88), umfassend zumindest einen ummantelten Draht zur Karkassenverstärkung, **dadurch gekennzeichnet, dass** der ummantelte Draht (24) Anspruch 1 oder 2 entspricht.

4. Reifen (88) nach Anspruch 3, bei welchem sich der Draht (24) von einer Flanke (34) zur anderen des Reifens erstreckt, wobei er den Scheitelpunkt (32) passiert, folgend einem Weg in Bustrophedon, so dass Hin- und Rückweg-Falten (P) des Drahts gebildet werden, wobei die Falten mit nackten Teilen (Nᵢ) des Drahts zusammenfallen.

5. Reifen (88) nach Anspruch 3, bei welchem sich der Draht (24) von einer Flanke (34) zur anderen des Reifens erstreckt, wobei er den Scheitelpunkt (32) passiert, folgend einem Weg in Bustrophedon, so dass Hin- und Rückweg-Falten (P) des Drahts gebildet werden, wobei die Falten mit ummantelten Teilen (Gᵢ) des Drahts zusammenfallen.

6. Reifen (88) nach Anspruch 5, bei welchem jede Falte (P) mit einer Falte (P), die ihr vorangeht, und einer Falte (P), die ihr nachfolgt, unmittelbar verbunden ist durch jeweils ein ummanteltes Drahtteil (Gᵢ) und ein nacktes Drahtteil (Nᵢ).

7. Anlage (20) zur Herstellung eines Reifens, umfassend Mittel (22) zur Verlegung eines ummantelten Drahts (24) auf einem Rohling (26) eines Reifens (88) und eine Einrichtung (28) zur Herstellung des ummantelten Drahts (24), der einen nackten Draht (24N) umfasst, der mit einem Mantel (24G) aus Gummi verkleidet ist, wobei die Einrichtung (28) die Verlegungsmittel (22) kontinuierlich versorgt und eine, als ortsfest bezeichnete, Ummantelungskammer (48) umfasst, die dazu bestimmt ist, mit Gummi versorgt zu werden und vom Draht (24) durchquert zu werden, **dadurch gekennzeichnet, dass** die Einrichtung (28) ein Organ (54) umfasst, das dazu gedacht ist, in Bezug auf den Gummi, einen die ortsfeste Ummantelungskammer (48) durchquerenden Teil des nackten Drahts, bezeichnet als durchquerender Teil des Drahts, zu isolieren, wobei dieses Isolationsorgan (54) verlagerbar ist zwischen:
- einer Position zur Isolation des durchquerenden Teils des Drahts (24) in Bezug auf den Gummi, und
- einer Position zum In-Kontakt-Bringen des durchquerenden Teils des Drahts (24) mit dem Gummi.

8. Anlage (20) nach Anspruch 7, bei welcher die Mittel (22) zur Verlegung des ummantelten Drahts (24) ein Organ (36C) zur Führung des Drahts (24) aufweisen, das verlagerbar ist entsprechend einer periodisch alternierenden Hin- und Herbewegung, insbesondere im Wesentlichen zwischen zwei Flanken (34) des Rohlings (26), wobei die Anlage (20) weiterhin Mittel zur Synchronisation der periodisch alternierenden Bewegung des Führungsorgans (36C) mit der alternierenden Verlagerung des Isolationsorgans (54) umfasst.

9. Anlage (20) nach Anspruch 8, umfassend Mittel (43) zur relativen Verlagerung der Verlegungsmittel (22) und der Einrichtung (28) zur Herstellung des ummantelten Drahts (24), welche die Regulierung der Länge des Wegs des ummantelten Drahts (24) zwischen diesen Verlegungsmitteln (22) und der Herstellungseinrichtung (28) ermöglichen.

10. Anlage (20) nach einem der Ansprüche 7 bis 9, bei welcher das Isolationsorgan (54) translatorisch verlagerbar ist zwischen seinen Positionen zur Isolation und zum In-Kontakt-Bringen, insbesondere parallel zu einer im Wesentlichen geradlinigen Verlaufsrichtung des Drahts (24) durch die ortsfeste Ummantelungskammer (48).

11. Anlage (20) nach Anspruch 10, bei welcher das Isolationsorgan (54) eine röhrenförmige allgemeine Form aufweist, welche die Passage des Drahts (24) in Achsenrichtung durch dieses Isolationsorgan (54) ermöglicht, das Isolationsorgan (54) umfassend eine innere Aussparung (56), die, zur Durchquerung durch den Draht (24) bestimmt, eine als beweglich bezeichnete Ummantelungskammer (56) bildet, und zumindest eine Öffnung (58), die eine Passage für Gummi zwischen der ortsfesten (48) und der beweglichen (56) Kammer bildet.

12. Anlage (20) nach Anspruch 10, bei welcher das Isolationsorgan (54) dazu gedacht ist, einen vorgelagerten (48A) und einen nachgelagerten (48B) Teil der ortsfesten Ummantelungskammer (48) voneinander zu trennen, wobei der nachgelagerte Teil (48B) der ortsfesten Ummantelungskammer (48) dazu bestimmt ist, vom Draht (24) durchquert zu werden, wobei das Isolationsorgan (54) eine Öffnung (90) umfasst, die eine Passage für den Gummi zwischen den beiden Teilen, dem vorgelagerten (48A) und dem nachgelagerten (48B), der ortsfesten Ummantelungskammer (48) bildet.

13. Anlage (20) nach einem der Ansprüche 7 bis 12, umfassend Mittel (62, 64) zur periodischen alternierenden Verlagerung des Isolationsorgans (54).

14. Anlage (20) nach Anspruch 13, umfassend Mittel (70) zur Regulierung der Frequenz der alternierenden Verlagerung des Isolationsorgans (54).

15. Anlage (20) nach Anspruch 13 oder 14, umfassend Mittel (80, 82) zur Regulierung der Amplitude der alternierenden Verlagerung des Isolationsorgans (54).

16. Anlage (20) nach einem der Ansprüche 7 bis 15, umfassend Mittel (66, 68) zur Regulierung der durchschnittlichen Position des Isolationsorgans (54) in Bezug auf die ortsfeste Ummantelungskammer (48).

17. Anlage (20) nach Anspruch 16, bei welcher die Mittel zur Regulierung (66, 68) der durchschnittlichen Position des Isolationsorgans (54) in Bezug auf die ortsfeste Ummantelungskammer (48) einen ersten, die Mittel (62, 64) zur alternierenden Verlagerung des Isolationsorgans (54) tragenden Träger (66) umfassen, der beweglich angebracht ist auf einem zweiten Träger (68), der in Bezug auf die ortsfeste Ummantelungskammer (48) ortsfest ist.

18. Anlage (20) nach einem der Ansprüche 13 bis 17, bei welcher die Mittel zur alternierenden Verlagerung des Isolationsorgans (54) eine Einheit vom Typ Schieber-Kurbel (62, 64) umfassen.

19. Anlage (20) nach den Ansprüchen 14 und 18 zusammengenommen, bei welcher die Mittel (70) zur Regulierung der Frequenz der alternierenden Verlagerung des Isolationsorgans (54) Mittel (71) zur Regulierung der Drehgeschwindigkeit der Kurbel (64) umfassen.

20. Anlage (20) nach den Ansprüchen 15 und 18 zusammengenommen, bei welcher die Einheit vom Typ Schieber-Kurbel (62, 64) eine Scheibe umfasst, welche die Kurbel (64) bildet, wobei die Mittel (80, 82) zur Regulierung der Amplitude der alternierenden Verlagerung des Isolationsorgans Mittel (80, 82) zur Regulierung einer Anlenkposition des Schiebers (62) auf der Kurbel (64) umfassen.

21. Verfahren zur Herstellung eines Reifens (88), bei welchem ein ummantelter Draht (24) auf einem Rohling (26) eines Reifens (88) verlegt wird, **dadurch gekennzeichnet, dass** der ummantelte Draht (24) mittels einer Anlage (20) nach einem der Ansprüche 7 bis 20 hergestellt und kontinuierlich verlegt wird.

22. Verfahren zur Herstellung eines Reifens (88), bei welchem ein ummantelter Draht (24) auf einem Rohling (26) eines Reifens (88) verlegt wird, **dadurch gekennzeichnet, dass** ein ummantelter Draht kontinuierlich verlegt wird, der einen nackten Draht (24N) umfasst, der mit einem Mantel (24G) aus Gummi verkleidet ist, wobei der Mantel (24G) mehrere Abschnitte umfasst, die entlang dem nackten Draht (24N) voneinander beabstandet sind, so dass sich nackte Drahtteile (Nᵢ) mit ummantelten Drahtteilen (Gᵢ) abwechseln.

23. Verfahren nach Anspruch 22, bei welchem der Draht (24) von einer Flanke (34) zu einer anderen des Rohlings des Reifens verlegt wird, wobei ein Scheitelpunkt (32) des Rohlings passiert wird, folgend einem Weg in Bustrophedon, so dass Hin- und Rückweg-Falten (P) des Drahts gebildet werden, wobei die Falten mit nackten Teilen (Nᵢ) des Drahts zusammenfallen.

24. Verfahren nach Anspruch 22, bei welchem der Draht (24) von einer Flanke (34) zu einer anderen des Rohlings des Reifens verlegt wird, wobei ein Scheitelpunkt (32) des Rohlings passiert wird, folgend einem Weg in Bustrophedon, so dass Hin- und Rückweg-Falten (P) des Drahts gebildet werden, wobei die Falten mit ummantelten Teilen (Gᵢ) des Drahts zusammenfallen.

25. Verfahren nach Anspruch 24, bei welchem der Draht (24) so verlegt wird, dass jede Falte (P) mit einer Falte (P), die ihr vorangeht, und einer Falte (P), die ihr nachfolgt, unmittelbar verbunden ist durch jeweils ein ummanteltes Drahtteil (Gᵢ) und ein nacktes Drahtteil (Nᵢ).
